(19) Europäisches Patentamt

European Patent Office

Office européen des brevets

(11) **EP 2 015 465 A2**

(12) **EUROPÄISCHE PATENTANMELDUNG**

(43) Veröffentlichungstag:
**14.01.2009 Patentblatt 2009/03**

(51) Int Cl.:
***H04B 1/713*** *(2006.01)*

(21) Anmeldenummer: **08010949.9**

(22) Anmeldetag: **17.06.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **11.07.2007 DE 102007032230**
**24.01.2008 DE 102008005816**

(71) Anmelder: **ABB AG**
**68309 Mannheim (DE)**

(72) Erfinder:
• **Steigmann, Richard, Dipl.-Ing.**
  **67229 Gerolsheim (DE)**
• **Dzung, Dagfey, Dr.-Ing.**
  **5430 Wettingen (CH)**
• **Vallestad, Anne E., Sivil-Ing.**
  **1338 Sandvika (SE)**

(74) Vertreter: **Partner, Lothar et al**
**ABB AG**
**GF-IP/PV1**
**Wallstadter Strasse 59**
**68526 Ladenburg (DE)**

(54) **Verfahren zur Erzeugung von Frequenzsprungfolgen**

(57)     Es wird ein Verfahren zur Erzeugung von Frequency-Hopping-Frequenzfolgen bei einem drahtlosen Duplex-Kommunikationssystem in ausgewählten Frequenzbändern vorgeschlagen,

1) wobei zunächst Teilfrequenzband-Paare gemäß folgender Paar-Identifikation identifiziert werden:

1a) mindestens eines der beiden Teilfrequenzbänder eines Paars beinhaltet lückenlos einige Sprungfrequenzen, welche gleichzeitig aktiv sein können und welche mindestens einen vorgegebenen Frequenzabstand ($B_H$) voneinander aufweisen,

1b) bei jedem Teilfrequenzband-Paar dient ein Teilfrequenzband als Sende-Teilfrequenzband und ein Teilfrequenzband als Empfangs-Teilfrequenzband,

1b) innerhalb eines jeden Teilfrequenzband-Paares haben das Sende-Teilfrequenzband und das Empfangs-Teilfrequenzband mindestens einen vorgegebenen Duplex-Frequenzabstand (D),

1d) die einzelnen Teilfrequenzband-Paare unterscheiden sich durch ihre Mittenfrequenzen voneinander,

2) wobei eine Frequency-Hopping-Folge als Folge für eine vorgegebene Sende-Übertragungsstrecke definiert wird,

3) wobei nach jedem Wechsel des Taktsignals eines Frequency-Hopping-Taktgebers das nächste Element dieser übertragungsstrecken-spezifischen Frequency-Hopping-Folge der Mittenfrequenz des Sende-Teilfrequenzbands zugeteilt wird,

4) wobei als zu diesem Wechsel des Taktsignals zugehöriges Empfangs-Teilfrequenzband dasjenige Teilfrequenzband gewählt wird, welches mit dem Sende-Teilfrequenzband entsprechend der Paar-Identifikation zu einem Teilfrequenzband-Paar zusammengefasst worden ist.

**Fig. 1a**

EP 2 015 465 A2

**Fig. 1b**

**Beschreibung**

Die Erfindung bezieht sich auf ein Verfahren zur Erzeugung von Frequency-Hopping-Frequenzfolgen. Frequency Hopping, nachfolgend stets kurz FH genannt, wird bei der drahtlosen Kommunikation genutzt, um die Zuverlässigkeit der Kommunikation in denjenigen Fällen zu verbessern, in denen frequenz-selektives Fading und Interferenzen zu erwarten sind. Nachfolgend wird FH bei ausgewählten Frequenzbändern in Duplex-Kommunikationssystemen betrachtet.

Aus der DE 103 34 873 A1 ist ein Verfahren zum Betrieb eines Systems gemäß TDMA (Time Division Multiple Access) mit einer Vielzahl drahtloser Sensoren und/oder Aktoren als Knoten und einer Basisstation bekannt, welches in einer Maschine oder Anlage, wie Industrieroboter, Herstellungsautomat oder Fertigungsautomat, installiert ist, wobei zyklische TDMA-Datenübertragungsblöcke übertragen werden und sich jeder TDMA-Datenübertragungsblock, nachfolgend als Rahmen bezeichnet, aus sukzessive nacheinander folgenden Zeitschlitzen zusammensetzt. Jeder Zeitschlitz ist einem bestimmten Knoten zugeordnet. Die Uplink-Signale von den unterschiedlichen Knoten zu der Basisstation können gleichzeitig auf zwei, drei oder mehr unterschiedlichen Frequenzen gesendet werden, während die Downlink-Signale von der Basisstation zu den unterschiedlichen Knoten auf lediglich einer, von den Uplink-Frequenzen unterschiedlichen Frequenz gesendet werden. Die Zeitschlitze und die unterschiedlichen Uplink-Frequenzen der unterschiedlichen Knoten werden einmal festgelegt und danach beibehalten.

Der Inhalt der DE 103 34 873 A1 wird in den Offenbarungsgehalt der vorliegenden Anmeldung ausdrücklich miteinbezogen.

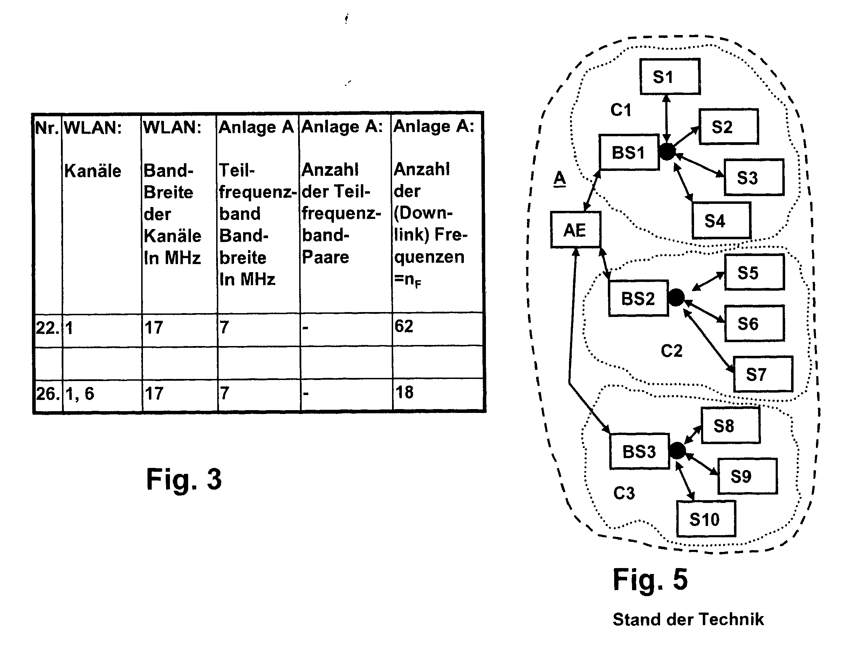

Aufbauend auf den und unter Beachtung der vorstehenden Erläuterungen ist es auch möglich, ein aus mehreren Zellen mit je mindestens einer Basisstation und einer Vielzahl Knoten bestehendes System sowohl für die Uplink-Signale als auch für die Downlink-Signale nach dem FH-Verfahren zu betreiben, um derart die Qualität der drahtlosen Kommunikation zu erhöhen. Fig. 5 zeigt ein bekanntes drahtloses Duplex-Kommunikationssystem bei einer Anlage A (beispielsweise Maschine oder Anlage, wie Industrieroboter, Herstellungsautomat oder Fertigungsautomat) mit beispielsweise drei Zellen C1 bzw. C2 bzw. C3, denen jeweils eine Basisstation BS1 bzw. BS2 bzw. BS3 zugeordnet ist, wobei die Basisstation BS1 beispielsweise mit Knoten S1, S2, S3, S4 der ersten Zelle C1, die Basisstation BS2 mit Knoten S5, S6, S7 der zweiten Zelle C2 und die Basisstation BS3 mit Knoten S8, S9, S10 der dritten Zelle C3 kommuniziert. Bei den Knoten S1, S2.... handelt es sich um Sensoren oder Aktoren. Die Basisstationen BS1, BS2, BS2 sind mit einer übergeordneten Automatisierungseinrichtung AE (Prozessrechner) verbunden. Selbstverständlich ist die Konfiguration gemäß Fig. 5 lediglich als sehr vereinfachtes Ausführungsbeispiel zu verstehen, denn im konkreten Fall kommuniziert jede Basisstation mit einer wesentlich größeren Anzahl an Knoten.

Die Grundlagen des FH sind beispielsweise aus J. G. Proakis, Digital Communications, McGraw Hill, 1983, Section 8.3, pp. 580 - 587 bekannt.

Zu den Grundlagen des FH wird ausdrücklich auf A. A. Shaar and P. A. Davies, "A survey of one-coincidence sequences for frequency-hopped spread spectrum systems", IEE Proceedings, Vol. 131, Part F, No. 7, December 1984, Seiten 719 - 724 hingewiesen. Der Inhalt dieses Dokumentes wird in den Offenbarungsgehalt der vorliegenden Anmeldung ausdrücklich miteinbezogen.

Des Weiteren wird auf das Fachbuch K. Dostert, Powerline Kommunikation, Francis Verlag GmbH Poing, 2000, Seiten 116 - 123 hingewiesen.

Der Wechsel der gemäß der FH-Frequenzfolge festgelegten Frequenzen erfolgt dabei bei einem gemäß TDMA betriebenen Kommunikations-System vorzugsweise rahmenweise, d. h. ein vorzusehender FH-Taktgeber gibt jeweils exakt zwischen zwei Rahmen ein Taktgebersignal ab, um auf die nächste Sprungfrequenz zu wechseln. Die Erzeugung der FH-Frequenzfolge erfolgt beispielsweise auf Basis von Taktgebersignalen der Basisstation (Master), welche den Knoten mittels der Downlink-Signale zugeleitet werden. Beim Ausführungsbeispiel gemäß Fig. 5 dient z. B. Basisstation BS2 als Master für Zelle C2.

Die FH-Frequenzfolgen sind dabei vorteilhaft derart festgelegt,

- dass die Uplink-Frequenzen und die Downlink-Frequenzen das gleiche verfügbare Gesamt-Frequenzband - beim vorliegenden Ausführungsbeispiel 2401 MHz - 2479 MHz - benutzen,
- dass alle Frequenzen des zugewiesenen Frequenzbandes verwendet werden,
- dass unmittelbar aufeinanderfolgende Frequenzsprünge jeweils einen möglichst großen Frequenzabstand aufweisen,
- dass die unterschiedlichen, gleichzeitig auftretenden Uplink-Frequenzen sowie die gleichzeitig auftretende Downlink-Frequenz verschiedener Zellen möglichst keine Interferenzen verursachen, d. h.
- dass die Frequenzfolgen, die für unterschiedliche Zellen benutzt werden, nur geringe Korrelation aufweisen.

Es ist dabei jedoch nicht zwingend erforderlich, dass die FH-Frequenzfolgen alle vorstehend angeführten Kriterien erfüllen.

Aus der DE 102 11 235 A1 ist ein Verfahren zur Generierung einer FH-Frequenzfolge bekannt, wobei eine periodische FH-Sprungfrequenz-Folge durch Vorgabe einer Sprungfrequenz-Bandbreite und einer ganzzahligen Folge festgelegt ist. Die wesentlichen Kriterien des Verfahrens sind dadurch bestimmt,

- dass das verfügbare Gesamt-Frequenzband in eine vorgegebene Anzahl nicht überlappender Teilfrequenzbänder aufgeteilt wird, wobei jedes Teilfrequenzband (ein Teilfrequenzband ist ein lückenloser Bereich von aufeinander-folgenden Sprungfrequenzen) die Bandbreite $B_s$ aufweist,
- dass eine erste ganzzahlige periodische Folge W benutzt wird, um ein bestimmtes Frequenzband bei jeder Zeitmarke des FH-Taktgebers auszuwählen,
- dass jedes Teilfrequenzband eine vorgegebene Anzahl $n_l$ unterschiedlicher Sprungfrequenzen enthält, wobei die Sprungfrequenz-Bandbreite $B_H$ beträgt,
- dass eine zweite $n_l$-äre ganzzahlige periodische Folge $X_i$ mit Sprungfrequenz-Index i benutzt wird, um eine bestimmte Sprungfrequenz bei jeder Zeitmarke des FH-Taktgebers auszuwählen,
- so dass die aktuelle Sprungfrequenz f beträgt:

$$f = f_0 + W \cdot B_S + X_i \cdot B_H,$$

- wobei $f_0$ eine Basisfrequenz ist.

Der Inhalt der DE 102 11 235 A1 wird in den Offenbarungsgehalt der vorliegenden Anmeldung ausdrücklich miteinbezogen.

Allgemein ist FH ein bekanntes Verfahren bei der drahtlosen Kommunikation, um frequenzselektivem Fading und Interferenzeffekten entgegen zu wirken: Die Sprungfrequenz "springt" dabei über einem breiten Frequenzband gemäß einer zwischen Sender und zugeordnetem Empfänger vereinbarten Sprungfrequenz-Folge (FH-Frequenzfolge), welche sowohl dem Sender als auch dem Empfänger bekannt ist. Bei Übertragungskanälen mit frequenzabhängigen Übertragungsbedingungen und relativ hohen Fehlerraten kann durch FH gewährleistet werden, dass eine genügende Anzahl Übertragungen eine ausreichende Qualität aufweist (niedrige Fehlerrate). In Kombination mit Fehlerüberwachungstechniken wie Forward Error Correction FEC oder Automatic Repeat Request ARQ stellen FH-Systeme eine zuverlässige Kommunikation sicher. In diesem Zusammen sind einige Charakteristiken der FH-Frequenzfolgen zu beachten:

Hinsichtlich des Frequenzbandes gilt, dass die Frequenzen über das gesamte verfügbare Frequenzband springen können, beispielsweise über 80 MHz, welche im 2,4 GHz ISM Band zwischen 2401 MHz und 2479 MHz verfügbar sind. Allerdings können Interferenzen in den Fällen auftreten, bei denen benachbarte FH-Systeme dieselben Frequenzen nutzen. Um die Koexistenz benachbarter FH-Systeme zu verbessern ist es deshalb empfehlenswert, Frequenz-Planungen vorzunehmen, bei denen benachbarte FH-Systeme ausgewählte, nicht überlappende Teilgruppen der verfügbaren Frequenzbänder nutzen.

Hinsichtlich der FH-Folgen-Typen gilt, dass FH-Folgen allgemein in Form von n-ären ganzzahligen periodischen Folgen repräsentiert werden können, wobei n die Anzahl der möglichen Sprungfrequenzen im verfügbaren Frequenzband ist. Nach jeder FH-Taktdauer (Verweilzeit), beispielsweise der Zeitspanne eines Rahmens (TDMA-Datenübertragungsblocks) bei der TDMA-Kommunikation, verwendet der Sender die nächste Ganzzahl der FH-Folge und teilt diese der aktuellen Sprungfrequenz zu. Die FH-Folgen sind entweder deterministisch (beispielsweise periodisch mit einer kurzen Periode) oder pseudo zufällig (beispielsweise mit einer sehr langen Periode). Falls einige FH-Übertragungsstrecken im selben Bereich desselben Frequenzbandes betrieben werden, dann bestimmt die Kreuzkorrelation ihrer FH-Frequenzfolgen die auftretenden Interferenzen. Bei deterministischen Frequenzfolgen kann eine schlechte Auswahl zu sehr hohen Interferenzen führen. Das vorstehend bereits erwähnte Dokument IEE Proceedings, Vol. 131, Part F, No. 7, December 1984, Seiten 719 - 724 beschreibt Erzeugungsverfahren zur Generierung deterministischer FH-Folgen mit niedriger Korrelation. Im Unterschied hierzu können die Korrelations-Eigenschaften von pseudo zufälligen FH-Folgen in der Praxis nur mit statistischen Verfahren und den damit verbundenen Unsicherheiten ermittelt werden.

Hinsichtlich des Übertragungsmodus Simplex oder Duplex gilt, dass der Übertragungsmodus Simplex vorliegt, wenn während einer betrachteten Zeitspanne lediglich ein Sender aktiv ist. Beim Übertragungsmodus Duplex treten Sender und Empfänger gleichzeitig aktiv auf, wobei ein Duplex-Frequenzabstand D zwischen Sendefrequenz - beispielsweise Downlink DL - und Empfangsfrequenz - beispielsweise Uplink UL - eingehalten wird, um die Interferenzen zwischen den gleichzeitigen Funkübertragungen Senden und Empfangen zu minimieren.

Der Erfindung liegt die Aufgabe zugrunde, ein Verfahren zur Erzeugung von Frequency-Hopping-Frequenzfolgen für ein Duplex-Kommunikationssystem in ausgewählten Frequenzbändern anzugeben.

Diese Aufgabe wird erfindungsgemäß gelöst durch ein Verfahren zur Erzeugung von Frequency-Hopping-Frequenzfolgen bei einem drahtlosen Duplex-Kommunikationssystem in ausgewählten Frequenzbändern,

1) wobei zunächst Teilfrequenzband-Paare gemäß folgender Paar-Identifikation identifiziert werden:

1a) mindestens eines der beiden Teilfrequenzbänder eines Paars beinhaltet lückenlos einige Sprungfrequenzen, welche gleichzeitig aktiv sein können und welche mindestens einen vorgegebenen Frequenzabstand voneinander aufweisen,
1b) bei jedem Teilfrequenzband-Paar dient ein Teilfrequenzband als Sende-Teilfrequenzband und ein Teilfrequenzband als Empfangs-Teilfrequenzband,
1b) innerhalb eines jeden Teilfrequenzband-Paares haben das Sende-Teilfrequenzband und das Empfangs-Teilfrequenzband mindestens einen vorgegebenen Duplex-Frequenzabstand,
1d) die einzelnen Teilfrequenzband-Paare unterscheiden sich durch ihre Mittenfrequenzen (= Frequenz in der Mitte eines Teilfrequenzbandes) voneinander,

2) wobei eine Frequency-Hopping-Folge als Folge für eine vorgegebene Sende-Übertragungsstrecke definiert wird,
3) wobei nach jedem Wechsel des Taktsignals eines Frequency-Hopping-Taktgebers das nächste Element dieser übertragungsstrecken-spezifischen Frequency-Hopping-Folge der Mittenfrequenz des Sende-Teilfrequenzbands zugeteilt wird,
4) wobei als zu diesem Wechsel des Taktsignals zugehöriges Empfangs-Teilfrequenzband dasjenige Teilfrequenzband gewählt wird, welches mit dem Sende-Teilfrequenzband entsprechend der Paar-Identifikation zu einem Teilfrequenzband-Paar zusammengefasst worden ist.

Die vorliegende Erfindung verhilft vorteilhaft dazu, Gruppen von FH-Sprungfrequenzfolgen zu erzeugen, welche

- niedrige deterministische Korrelationen haben,
- den Duplex-Frequenzabstand D zu jeder Zeit aufrecht erhalten, während dasselbe Frequenzband gleichzeitig für beide Übertragungsrichtungen - Uplink UL und Downlink DL - genutzt wird,
- in verschiedenen ausgewählten Teilfrequenzbändern des verfügbaren Gesamt-Frequenzbands betreibbar sind, wobei die Auswahl beispielsweise so vorgenommen wird, dass die Koexistenz mit benachbarten Systemen verbessert wird.

Dabei wird paralleles FH verschiedener Übertragungsstrecken nicht nur auf der Uplink-Übertragungsstrecke UL, sondern auch auf der Downlink-Übertragungsstrecke DL ermöglicht. Auch bei nicht-synchronem FH der Zellen eines Duplex-Kommunikationssystems bleibt auf Grund der erzeugten FH-Sprungfrequenzfolgen die Interferenz zwischen den Zellen klein.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

Fig.1a, b    die Zuteilung zwischen einer ganzzahligen FH-Folge und zugelassenen Sprungfrequenzen,

Fig. 2    eine Tabelle der resultierenden Parameter, wie Anzahl unterschiedlicher Sprungfrequenzen eines Teilfrequenzbandes $n_I$ und Anzahl der Teilfrequenzband-Paare $n_B$ zu einem ersten Erzeugungsverfahren von FH-Folgen,

Fig. 3    eine Tabelle der resultierenden Parameter, wie Anzahl der Teilfrequenzband-Paare $n_F$ zu einem zweiten Erzeugungsverfahren von FH-Folgen,

Fig. 4    ein einfaches Beispiel zur "graphischen" Erläuterung der zugelassenen / nicht zugelassenen Frequenzen, Teilfrequenzband-Paare, Mittenfrequenzen, Duplex-Frequenzabstand,

Fig. 5 ein bekanntes drahtloses Duplex-Kommunikationssystem,

Fig. 6 ein Beispiel für eine asymmetrische Auslastung bei der Duplex-Übertragung zum ersten Erzeugungsverfahren,

Fig. 7 ein Beispiel für eine asymmetrische Auslastung bei der Duplex-Übertragung zum zweiten Erzeugungsverfahren.

Bei vorgegebenen verfügbaren Frequenzbändern wird eine Gruppe von FH-Sprungfrequenzfolgen erfindungsgemäß wie folgt in folgenden *Schritten* generiert:

1. Es werden Paare möglicher Teilfrequenzbänder, d. h. Teilfrequenzband-Paare identifiziert (Paar-Identifikation). Ein Teilfrequenzband ist dabei ein Frequenzband, welches lückenlos einige Sprungfrequenzen beinhaltet, welche gleichzeitig aktiv sein können und welche mindestens einen vorgegebenen Frequenzabstand $B_H$ voneinander aufweisen. Innerhalb eines bestimmten Teilfrequenzband-Paares haben das Sende-Teilfrequenzband und das Empfangs-Teilfrequenzband den vorgegebenen (erforderlichen) Duplex-Frequenzabstand D. Bei jedem Teilfrequenzband-Paar dient ein Teilfrequenzband zum Senden (Sende-Teilfrequenzband) - beispielsweise für Downlink DL - und ein Teilfrequenzband dient zum Empfangen (Empfangs-Teilfrequenzband) - beispielsweise für Uplink UL. Die einzelnen Teilfrequenzband-Paare unterscheiden sich durch ihre Mittenfrequenzen voneinander und können sich dabei auch überlappen.

2. Es wird eine FH-Folge als ganzzahlige Folge für eine vorgegebene Sende-Übertragungsstrecke - beispielsweise Downlink DL - definiert. Nach jedem Wechsel des Taktsignals eines FH-Taktgebers (Zeitmarke, Sprung-Zeitpunkt) - beispielsweise nach jedem TDMA-Datenübertragungsblock oder Rahmen - wird die nächste Ganzzahl dieser übertragungsstrecken-spezifischen FH-Folge der Mittenfrequenz des Sende-Teilfrequenzbands zugeteilt. Das zu diesem Sprung-Zeitpunkt zugehörige Empfangs-Teilfrequenzband ist dann dasjenige Teilfrequenzband, welches mit dem Sende-Teilfrequenzband entsprechend der Paar-Identifikation gemäß *Schritt 1.* zu einem Teilfrequenzband-Paar zusammengefasst worden ist.

3. Eine Gruppe von FH-Folgen für Mehrfach-Übertragungsstrecken kann beispielsweise entsprechend dem bereits erwähnten Dokument IEE Proceedings, Vol. 131, Part F, No. 7, December 1984, Seiten 719-724 erzeugt werden, was vorteilhaft zu deterministischen Folgen niedriger Korrelation führt.

4. Nachdem die Mittenfrequenzen der Teilfrequenzband-Paare bestimmt sind, ist es möglich oder erforderlich - dies hängt von der Bandbreite der Teilfrequenzbänder und der Anzahl der unterschiedlichen Sprungfrequenzen eines Teilfrequenzbandes ab -, Sprungfrequenzen innerhalb des Teilfrequenzbands zu definieren, die bei einer Übertragung genutzt werden können. Diese Sprungfrequenzen können mittels einer separaten ganzzahligen FH-Folge ermittelt werden. In diesem Fall wird die FH-Folge in zwei Stufen erhalten, d. h. in einer ersten Stufe werden die Teilfrequenzband-Mittenfrequenzen bestimmt und in einer zweiten Stufe wird der Sprungfrequenz-Index innerhalb des relevanten Teilfrequenzbandes bestimmt.

Nachfolgend werden diese vier *Schritte* an Hand von zwei unterschiedlichen Ausführungsbeispielen respektive Erzeugungsverfahren näher erläutert. Beim ersten Erzeugungsverfahren wird die FH-Folge in zwei Stufen erhalten. Beim zweiten Erzeugungsverfahren wird die FH-Folge in einer einzigen Stufe erzeugt. Den beiden Ausführungsbeispielen respektive Erzeugungsverfahren liegen jeweils die folgenden Annahmen/Anforderungen zugrunde:

1. Die Gruppe der zugelassenen Frequenzen ist eine Teilgruppe der neunundsiebzig möglichen Frequenzen, welche sich im Frequenzband zwischen 2401 MHz und 2479 MHz ergeben und zwischen welchen jeweils ein Frequenzabstand $B_H$ von mindestens 1 MHz besteht (= Frequenzabstand zwischen zwei Sprungfrequenzen).

2. Eingangsgrößen für den FH-Frequenzgenerator sind die Rahmen-Nummer FN und die Zellen-Identifizierung cell_id, d. h. die Information, für welche der verschiedenen Zellen C1, C2, C3....des Kommunikationssystems die aktuelle Sprungfrequenz zu erzeugen ist.

3. Ausgangsgrößen des FH-Frequenzgenerators sind die Downlink-Frequenz $f_{DL}$ und vier Uplink-Frequenzen $f_{UL,u}$ (Sprungfrequenz-Index u = 1, 2, 3, 4) innerhalb eines Teilfrequenzbandes mit $n_I$ unterschiedlichen Sprungfrequenzen, wobei für $n_I$ bei z. B. vier Uplink-Übertragungsstrecken und einem Frequenzabstand von mindestens 2 MHz zwischen diesen gilt: $n_I \geq 7$.

4. Die Basisstation BS erfordert keinerlei Beschränkungen hinsichtlich der Sendefrequenz, d. h. die Downlink-Frequenz $f_{DL}$ kann sich irgendwo zwischen 2401 MHz und 2479 MHz befinden, mit 1 MHz Bandbreite.

5. Die Basisstation BS erfordert keinerlei Beschränkungen hinsichtlich der Lage der Empfangs-Teilfrequenzbänder, insbesondere beträgt z. B. die Quantisierung des lokalen FH-Frequenzgenerators des Empfängers 1 MHz. Die durch die Zwischenfrequenzstufe im Empfänger vorgegebene maximale Breite eines Teilfrequenzbandes beträgt 17 MHz, respektive $n_I \leq 17$ bei $B_H = 1$ MHz Bandbreite respektive Frequenzabstand zwischen zwei Sprungfrequenzen.

6. Der Duplex-Frequenzabstand D entspricht dem kleinsten Frequenzabstand zwischen der Downlink-Frequenz $f_{DL}$ und den Frequenzen der mehreren Uplink-Frequenzen $f_{UL,u}$, d. h. $D = \min(\text{over } u)|f_{DL} - f_{UL,u}|$. Die Basisstation erfordert $D \geq 22$ MHz.

7. Die FH-Folgen sollen deterministisch sein, d. h. periodisch mit kurzer Periode.

Das Wesentliche bei der Erzeugung von FH-Folgen unter diesen gegebenen Annahmen und Anforderungen ist, eine Gruppe von FH-Folgen zu generieren, deren Elemente - identifizierbar durch die Zellen-Identifizierung cell_id - kleine Kreuzkorrelationen haben.

Die Erzeugung von Gruppen von q-ären periodischen Folgen mit niedriger Kreuzkorrelation ist in dem bereits erwähnten Dokument IEE Proceedings, Vol. 131, Part F, No. 7, December 1984, Seiten 719 - 724 beschrieben und es wird ausdrücklich hierauf verwiesen. Wird für eine Ganzzahl q eine Primzahl p gewählt, nutzt die "construction 2" auf Seite 720 dieses Dokuments einen Galois-Körper GF(p) von p Elementen, um p-1 nicht konstante, ein-koinzidente, ganzzahlige Folgen mit der Periode p zu erzeugen. Falls q der Form $q = p^N$ entspricht, d. h. eine ganzzahlige Potenz einer Primzahl ist, nutzt die "construction 4" auf Seite 721 dieses Dokuments eine Galois-Körpererweiterung $GF(p^N)$, um eine Gruppe von $q = p^N$ ganzzahligen Folgen mit der Periode $q-1 = p^N-1$ zu erzeugen.

Die Hauptidee bei der Erzeugung von FH-Folgen ist es, die Elemente, d. h. Sprungfrequenzen und Teilfrequenzbänder zu identifizieren, bei denen diese Konstruktionen betreffend einen Galois-Körper GF(q) von q Elementen angewandt werden können. Diese Konstruktionen erzeugen q-äre Folgen, ausgedrückt durch Folgen von Ganzzahlen zwischen 0 und q-1. Diese Ganzzahlen sind dann mittels einer 1:1-Zuteilung umzusetzen in die aktuell gewünschten Sprungfrequenzen zwischen 2401 MHz und 2479 MHz (wobei nicht zugelassene Frequenzen, beispielsweise bedingt durch Koexistenz mit benachbarten WLAN-Kommunikationssystemen, zu berücksichtigen sind).

Diejenigen bei WLAN-Kommunikationssystemen verwendeten Frequenzbänder, welche den hier betrachteten Duplex-Kommunikationssystemen benachbart sind, müssen allerdings von den Gruppen der bei der Anlage A möglichen Sprungfrequenzen ausgeschlossen werden. Die WLAN-Spezifikationen definieren WLAN-Mittenfrequenzen bei 2407 MHz + CHNL_ID·5 MHz, wobei die Kanäle CHNL_ID zwischen 1 und 13 liegen. Die relevanten Bandbreiten sind:

- Spezifizierte Sende-Bandbreite = 22 MHz
- Typische Sende-Bandbreite = 11 MHz. Dies ist der dominante Beitrag zu Interferenzen von einem WLAN-Kommunikationssystem zu anderen Systemen, wie bei der unter Fig. 5 betrachteten Anlage A.
- Empfangs-Bandbreite = 17 MHz. Dies ist die für Interferenzen - beispielsweise von der betrachteten Anlage A - anfällige Bandbreite bei einem WLAN-Kommunikationssystem.

Falls Interferenzen von der Anlage A zu einem WLAN-Kommunikationssystem zu beachten sind, ist hauptsächlich die Empfangs-Bandbreite von 17 MHz von Bedeutung.

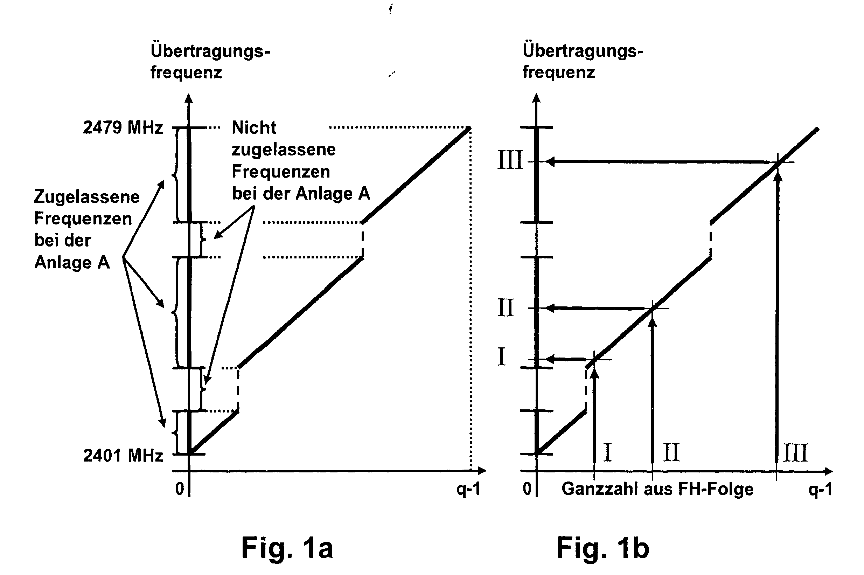

In den Fig. 1a,b ist die Zuteilung zwischen einer ganzzahligen FH-Folge - eine q-äre Folge, ausgedrückt durch eine Folge von Ganzzahlen zwischen 0 und q-1- und den zugelassenen Sprungfrequenzen zwischen 2401 MHz und 2479 MHz dargestellt. Die ermittelte Ganzzahl ist unter Beachtung der bei der Anlage A (aufgrund zu erwartender Interferenzen mit einem WLAN-Kommunikationssystem) nicht zugelassenen Frequenzen mittels einer 1:1-Zuteilung umzuformen in die aktuell zutreffende Sprungfrequenz, wie dies in Fig. 1b beispielhaft für drei Zuteilungen I, II, III dargestellt ist.

Nachfolgend wird die Erzeugung von FH-Folgen an Hand von zwei Erzeugungsverfahren näher erläutert. Bei einem ersten Erzeugungsverfahren werden $n_B$ Teilfrequenzband-Paare identifiziert, welche jeweils mindestens den Duplex-Frequenzabstand D aufweisen, deren Teilfrequenzbänder nicht-überlappend sind und eine Teilfrequenzband-Bandbreite $n_I$ (bei einem Frequenzabstand von $B_H$ =1 MHz zwischen den Sprungfrequenzen) aufweisen.

Dabei wird beim ersten Erzeugungsverfahren nachfolgend die Konstruktion von Folgen gemäß dem Dokument IEE Proceedings, Vol. 131, Part F, No. 7, December 1984, Seiten 719 - 724 in zwei Stufen durchgeführt. In einer ersten Stufe wird zunächst eine Gruppe $n_B$-äre Folgen $W_k$ gemäß der Konstruktionsmethode dieses Dokuments bestimmt. Die Teilfrequenzband-Folge $W_k$ wird anschließend für die Auswahl des Teilfrequenzbandes für jeden Sprung genutzt. Nach Wahl des Teilfrequenzbandes bestimmt eine separate $n_I$-äre FH-Folge $X_i$ den Sprungfrequenz-Index i innerhalb dieses Teilfrequenzbandes, wobei die Folge $X_i$ wiederum gemäß der Konstruktionsmethode nach dem Dokument IEE Proceedings, Vol. 131, Part F, No. 7, December 1984, Seiten 719 - 724 bestimmt wird.

Das erste Erzeugungsverfahren läuft wie folgt in den *Schritten 1. - 7.* ab:

1. Es wird die Teilfrequenzband-Bandbreite (bei einem Frequenzabstand von 1 MHz zwischen zwei Sprungfrequenzen) $n_I$ gewählt. Ein größeres $n_I$ gestattet dabei einerseits zwar mehrere Variationen hinsichtlich der Uplink-Frequenzbelegung, was vorteilhaft zu geringerer Korrelation führt, verringert jedoch andererseits die Anzahl $n_B$ der Teilfrequenzband-Paare (siehe nachstehenden *Schritt 3.).* Um die Konstruktionsverfahren für FH-Folgen beim Galois-Körper $GF(n_I)$ von $n_I$ Elementen nutzen zu können, sollte $n_I$ entweder eine Primzahl oder eine ganzzahlige Potenz einer Primzahl sein. Weitere Einschränkungen betreffend die Hardware der Basisstation sind durch die Ziffern 4., 5. und 6. der vorstehend erläuterten Annahmen/Anforderungen gegeben. Zusammenfassend betrachtet impliziert dies, dass folgende Werte der Menge zugelassen sind: $n_I \in \{7, 8, 9, 11, 13, 16, 17\}$.

2. Es werden in der bei der Anlage A zugelassenen Frequenzen nicht überlappende Teilfrequenzbänder identifiziert.

3. Es werden alle Teilfrequenzband-Paare (innerhalb der bei der Anlage A zugelassenen Frequenzen) aufgelistet, die zumindest den Duplex-Frequenzabstand D = 22 MHz aufweisen. Die Anzahl dieser Teilfrequenzband-Paare ist mit $n_B$ bezeichnet.

4. Falls $n_B$ keine Primzahl oder eine Potenz einer Primzahl ist, wird $n_B$ auf die nächste kleinere Ganzzahl herabgesetzt, welche diese Eigenschaften aufweist, d. h. $n_B \in \{2, 3, 4, 5, 7, 8, 9, 11, 13, 16, .....\}$.

5. Es wird gemäß der Konstruktionsmethode nach dem Dokument IEE Proceedings, Vol. 131, Part F, No. 7, December 1984, Seiten 719 - 724 eine Gruppe von Teilfrequenzband-Folgen $W_k$ unter Verwendung eines Galois-Körpers $GF(n_B)$ von $n_B$ Elementen erzeugt. Es ergeben sich $n_B$ verschiedene Teilfrequenzband-Folgen $W_k$, (wobei Teilfrequenzband-Index k = 0... $n_B$-1) oder $n_B$-1 verschiedene Teilfrequenzband-Folgen $W_k$ (wobei Teilfrequenzband-Index k = 0...$n_B$-2).

6. Es wird gemäß der Konstruktionsmethode nach dem Dokument IEE Proceedings, Vol. 131, Part F, No. 7, December 1984, Seiten 719 - 724 eine Gruppe von Sprungfrequenz-Folgen $X_i$ unter Verwendung eines Galois-Körpers $GF(n_I)$ von $n_I$ Elementen erzeugt (Sprungfrequenz-Index i innerhalb eines Teilfrequenzbandes). Es ergeben sich $n_I$ verschiedene Sprungfrequenz-Folgen $X_i$ (wobei Sprungfrequenz-Index i = 0...$n_I$-1) oder $n_I$-1 verschiedene Sprungfrequenz-Folgen $X_i$ (wobei Sprungfrequenz-Index i = 0... $n_I$-2).

7. Es werden die Teilfrequenzband-Folgen $W_k$ und die Sprungfrequenz-Folgen $X_i$ miteinander kombiniert. Die Downlink-Frequenz $f_{DL}$(FN) für eine bestimmte Rahmen-Nummer FN liegt im Teilfrequenzband $W_k$(FN) beim Sprungfrequenz-Index i von $X_i$(FN), wobei die in Fig. 1b skizzierte Zuteilung (siehe die Beispiele I, II, III) verwendet wird. Die Uplink-Frequenzen $f_{UL,u}$(FN) sind in demjenigen Teilfrequenzband, welches zu $W_k$(FN) gepaart ist, wie unter *Schritt* 3. erläutert (siehe die Paar-Identifikation zur Auffindung von Teilfrequenzband-Paaren). Für $n_I > 7$ und einen Frequenzabstand von 2 MHz zwischen den Uplink-Frequenzen ist der Sprungfrequenz-Index der u-ten Uplink-Frequenz $(X_i(FN) + 2u) \bmod(n_I)$, mit u = 0 - 3.

Der letzte *Schritt* 7. erzeugt bis zu $n_B \cdot n_I$ verschiedene FH-Folgen. Die zellspezifische FH-Folge (für eine bestimmte Zelle C1, C2... des Kommunikationssystems) ist durch den Teilfrequenzband-Index k und den Sprungfrequenz-Index i gegeben, beispielsweise durch die Zuteilung

## Zellen-Identifizierung cell_id = $10 \cdot k + i$.

Für eine bestimmte Rahmen-Nummer FN ergeben sich die Downlink-Frequenz $f_{DL}$ und die Uplink-Frequenzen $f_{ULi}$ durch die FH-Folge.

Falls die Perioden der Folgen $W_k$ und $X_i$ der Anzahl $n_B$ und der Anzahl $n_I$ entsprechen, dann ist die Periode der kombinierten FH-Folge das kleinste gemeinsame Vielfache von $n_B$ und $n_I$.

Nachfolgend ein einfaches Beispiel betreffend *Schritt* 5. des ersten Erzeugungsverfahrens:

- Gegeben sei z. B. $n_B$ = q = 5, d. h. die Menge der Ganzzahlen ist {0, 1, 2, 3, 4}
- Folge $W_1$ der Länge 4: [1 2 3 4]
- Folge $W_3$ wird erzeugt gemäß der Operation $W_3 = W_1$x3 mod 5 = [3 1 4 2]

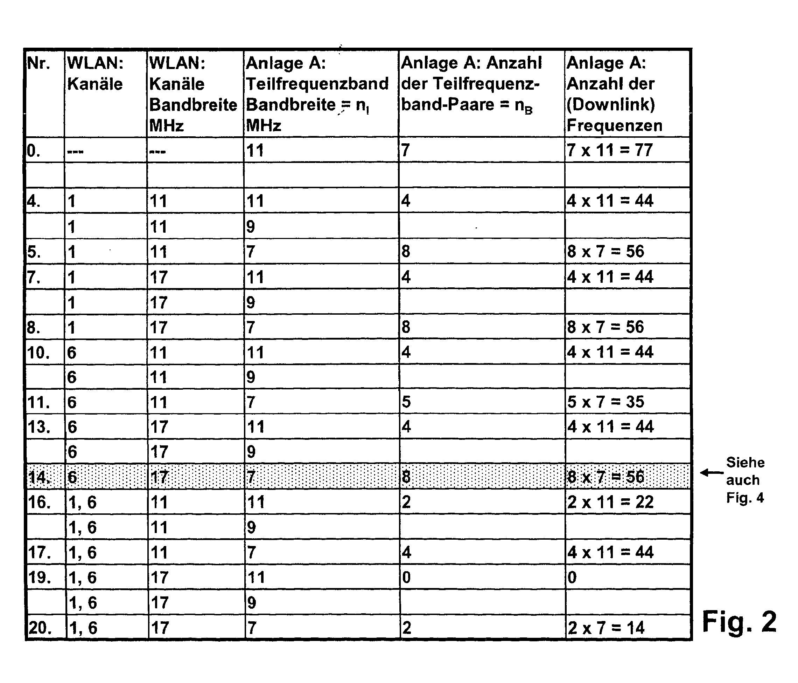

Fig. 2 zeigt in Form einer Tabelle Beispiele der resultierenden Parameter, wie Anzahl der Sprungfrequenzen eines Teilfrequenzbandes $n_I$, Anzahl der Teilfrequenzband-Paare $n_B$, Anzahl der (Downlink) Frequenzen $n_I \cdot n_B$ zum ersten Erzeugungsverfahren. Dabei wird angenommen, dass die bei der Anlage A zugelassenen Frequenzen die WLAN-Kanäle 1 und/oder 6 nicht einschließen:

Beim Beispiel Nr. 5 wird z. B. der WLAN-Kanal 1 mit seiner Bandbreite 11 MHz von den zugelassenen Frequenzen zwischen 2401 MHz und 2479 MHz ausgeschlossen. Bei Vorgabe einer Teilfrequenzband-Bandbreite 7 MHz (was sieben unterschiedliche Sprungfrequenzen mit einem Frequenzabstand 1 MHz ermöglicht) ergeben sich acht Teilfrequenz-Bandpaare, was zu einer Anzahl 8 x 7 = 56 unterschiedliche Downlink-Frequenzen führt.

Beim Beispiel Nr. 13 wird z. B. der WLAN-Kanal 6 mit seiner Bandbreite 17 MHz von den zugelassenen Frequenzen zwischen 2401 MHz und 2479 MHz ausgeschlossen. Bei Vorgabe einer Teilfrequenzband-Bandbreite 11 MHz (was elf unterschiedliche Sprungfrequenzen mit einem Frequenzabstand 1 MHz ermöglicht) ergeben sich vier Teilfrequenz-Bandpaare, was zu einer Anzahl 4 x 11 = 44 unterschiedliche Downlink-Frequenzen führt.

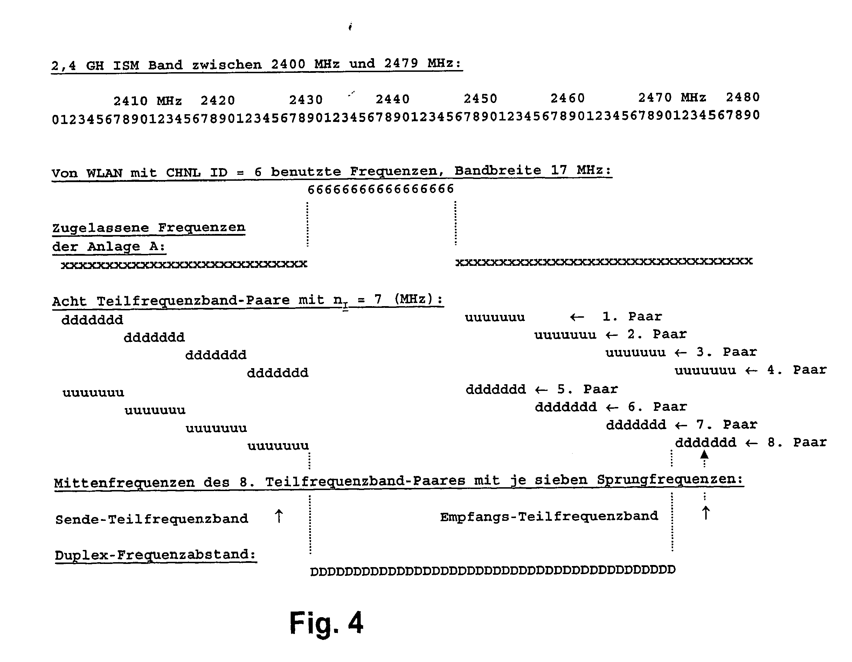

Zum Beispiel Nr. 14 wird auf Fig. 4 inklusive Figurenbeschreibung verwiesen.

Beim Beispiel Nr. 20 werden z. B. die WLAN-Kanäle 1, 6 mit Bandbreiten 17 MHz von den zugelassenen Frequenzen zwischen 2401 MHz und 2479 MHz ausgeschlossen. Bei Vorgabe einer Teilfrequenzband-Bandbreite 7 MHz (was sieben unterschiedliche Sprungfrequenzen mit einem Frequenzabstand 1 MHz ermöglicht) ergeben sich zwei Teilfrequenz-Bandpaare, was zu einer Anzahl 2x7=14 unterschiedliche Downlink-Frequenzen führt.

Das zweite Erzeugungsverfahren nutzt eine Ein-Stufen-Erzeugung von FH-Folgen. Wenn beispielsweise bei den Downlink-Frequenzen nicht wie bei den Uplink-Frequenzen unterschiedliche Teilfrequenzbänder genutzt werden, kann bei den Downlink-Frequenzen irgendeine bei der Anlage A zugelassene Frequenz genutzt werden, d. h. das Downlink-Teilfrequenzband beinhaltet dann lediglich eine einzige Sprungfrequenz. Die zugehörigen Uplink-Teilfrequenzbänder werden dann für die "Paar-Identifikation" entsprechend den Erfordernissen betreffend den Duplex-Frequenzabstand aus der Gruppe der bei der Anlage A zugelassenen Frequenzen ausgewählt.

Das zweite Erzeugungsverfahren läuft wie folgt in den *Schritten 1. - 7.* ab:

1. Es wird die Teilfrequenzband-Bandbreite $n_I$ gewählt. Die vorstehenden Erläuterungen zum ersten Erzeugungsverfahren unter *Schritt 1.* sind auch hier relevant.

2. Aus der bei der Anlage A zugelassenen Frequenzen wird die nächste zugelassene Downlink-Frequenz $f_{DL}$ ausgewählt.

3. Für diese Downlink-Frequenz $f_{DL}$ wird aus der bei der Anlage A zugelassenen Frequenzen ein Uplink-Teilfrequenzband ausgesucht, welches mindestens den Duplex-Frequenzabstand D = 22 MHz oberhalb oder unterhalb der Downlink-Frequenz $f_{DL}$ aufweist.

4. Ausgehend von *Schritt 2.* werden alle zugelassenen Downlink-Frequenzen $f_{DL}$ betrachtet - siehe *Schritt 3.* Die Anzahl der dabei aufgefundenen Paare, bestehend aus einer Downlink-Frequenz und eines Uplink-Teilfrequenzbands, wird mit $n_F$ bezeichnet.

5. Falls $n_F$ keine Primzahl oder eine ganzzahlige Potenz einer Primzahl ist, wird $n_F$ auf die nächste kleinere Ganzzahl herabgesetzt, welche diese Eigenschaft aufweist, d. h. $n_F \in \{2, 3, 4, 5, 7, 8, 9, 11, 13, 16,.....\}$.

6. Es wird gemäß der Konstruktionsmethode nach dem Dokument IEE Proceedings, Vol. 131, Part F, No. 7, December 1984, Seiten 719 - 724 eine Gruppe von Sprungfrequenz-Folgen $X_i$ unter Verwendung eines Galois-Körpers $GF(n_F)$ von $n_F$ Elementen erzeugt.

7. Die Gruppe von Sprungfrequenz-Folgen $X_i$ wird den aktuellen Frequenzen der Gruppe der für die Anlage A zugelassenen Frequenzen zugeteilt. Die Downlink-Frequenz $f_{DL}$ für eine bestimmte Rahmen-Nummer FN wird aus $X_i(FN)$ zugeteilt, wie in Fig. 1a,b dargestellt. Das hierzu korrespondierende Uplink-Teilfrequenzband wird gemäß der vorstehend unter *Schritt 3.* (Aufsuchen von Uplink-Teilfrequenzbändern) erläuterten Art und Weise ermittelt. Der Sprungfrequenz-Index der u-ten Uplink-Frequenz $f_{UL,u}$ wird gemäß der vorstehend unter *Schritt 7.* des ersten Erzeugungsverfahrens erläuterten Art und Weise ermittelt.

Gemäß *Schritt 6.* werden $n_F$ oder $n_F$-1 verschiedene FH-Folgen erzeugt, d. h. Zellen-Identifizierung cell_id = 0... $n_F$-1 oder Zellen-Identifizierung cell_id = 0... $n_F$-2. Jede Folge hat - abhängig von der Konstruktionsmethode - eine Periode von $n_F$ oder $n_F$-1 Rahmen.

Fig. 3 zeigt in Form einer Tabelle Beispiele der resultierenden Parameter, wie Anzahl $n_F$ der "Teilfrequenzband-Paare" zum zweiten Erzeugungsverfahren. Dabei wird angenommen, dass die bei der Anlage A zugelassenen Frequenzen die WLAN-Kanäle 1 und / oder 6 nicht einschließen. In der Spalte "Anzahl der Teilfrequenzband-Paare" ist jeweils "-" eingetragen, da beim zweiten Erzeugungsverfahren im strengen Sinne nicht Paare von Teilfrequenzbändern betrachtet werden, sondern es werden "Paare" identifiziert, welche jeweils einerseits eine einzige Sprungfrequenz (für Downlink) und andererseits ein Teilfrequenzband (für Uplink) beinhalten. Dies stellt einen Unterschied zwischen dem ersten und dem zweiten Erzeugungsverfahren dar, da beim ersten Erzeugungsverfahren jedes der beiden Teilfrequenzbänder eines Paars tatsächlich mehrere Sprungfrequenzen aufweist. Bei weniger strenger Betrachtung betreffend den Ausdruck "Paar" gilt für das zweite Erzeugungsverfahren jedoch "Anzahl der (Downlink) Frequenzen" = $n_F$ = Anzahl der "Teilfrequenzband-Paare".

Beim Beispiel Nr. 26 werden z. B. die WLAN-Kanäle 1 und 6 mit einer Bandbreite 17 MHz von den zugelassenen Frequenzen zwischen 2401 MHz und 2479 MHz ausgeschlossen. Bei Vorgabe einer Teilfrequenzband-Bandbreite 7 MHz (was sieben unterschiedliche Sprungfrequenzen mit einem Frequenzabstand 1 MHz ermöglicht) ergeben sich achtzehn unterschiedliche Downlink-Frequenzen.

Ein Vergleich zwischen erstem und zweitem Erzeugungsverfahren ergibt Folgendes:

Das zweite Erzeugungsverfahren hat eine feinere Quantisierung, da es sich nicht auf nicht überlappende Teilfrequenzbänder abstützt und deshalb mehr Frequenzen aus der Gruppe der bei der Anlage A zugelassenen Frequenzen nutzen kann. Die Ein-Stufen-Erzeugung von FH-Folgen mittels eines Galois-Körpers $GF(n_F)$ von $n_F$ Elementen stellt sicher, dass Downlink-FH-Folgen lediglich an einer einzigen Stelle aufeinandertreffen (ein-koinzident, "one-coincident"), d. h. nur einmal pro Periode eine Hamming-Distanz "0" aufweisen. Allerdings weisen einige FH-Folgen nicht den minimalen Frequenzabstand von mehr als 1 MHz zwischen Sprungfrequenzen von aufeinanderfolgenden Rahmen auf, verglichen mit einem vorgegebenen Frequenzabstand $n_I$ beim ersten Erzeugungsverfahren.

Beim zweiten Erzeugungsverfahren können einige Uplink-Teilfrequenzbänder bei einer Paarbildung mit verschiedenen Downlink-Frequenzen überlappen. Beim ersten Erzeugungsverfahren bilden verschiedene Downlink-Teilfrequenzbänder Paare mit verschiedenen nicht überlappenden Uplink-Teilfrequenzbändern. Diese Unterschiede betreffen hauptsächlich Interferenzen zwischen verschiedenen Uplink-Signalen. Kontinuierliche Downlink-Signale dominieren jedoch Interferenzen innerhalb einer Zelle.

Fig. 4 zeigt ein einfaches Beispiel zur "graphischen" Erläuterung der zugelassenen / nicht zugelassenen Frequenzen, Teilfrequenzband-Paare, Mittenfrequenzen, Duplex-Frequenzabstand, wobei folgende Symbole verwendet sind:

d = Sprungfrequenz bei der Downlink-Frequenz (z. B. Sende-Teilfrequenzband),
u = Sprungfrequenz bei der Uplink-Frequenz (z. B. Empfangs-Teilfrequenzband):
x = zugelassene Frequenzen
D = Duplex-Frequenzabstand
6 = nicht zugelassene Frequenz, da ein benachbarter WLAN-Kanal 6 existiert

Die für die Anlage A verfügbaren Frequenzen sind diejenigen Frequenzen, die durch ein benachbartes WLAN-System nicht benutzt werden. Das Beispiel zeigt die $n_B = 8$ Teilfrequenzband-Paare entsprechend Nr. 14 in Fig. 2. Der Duplex-Frequenzabstand beträgt in diesem Bespiel D > 40 MHz.

Im Folgenden wird der Fall behandelt, dass die Duplex-Übertragung unterschiedliche Auslastung im Downlink DL und im Uplink UL aufweist und damit asymmetrisch verläuft. Bei solchen asymmetrischen Übertragungen ist es bei der Duplex-Übertragungsrichtung mit geringer Auslastung möglich, gelegentlich ausgewählte Frequenzbänder zu verwenden, ohne dass dabei wesentliche Interferenzen mit anderen benachbarten Systemen verursacht werden, welche dieselben Frequenzbänder benutzen. Es können in Abhängigkeit der erwarteten Auslastung in einer der Duplex-Übertragungsrichtungen - Downlink DL, Uplink UL - verschiedene, ausgewählte Teilfrequenzbänder benutzt werden. Falls es beispielsweise bekannt ist, dass in der Übertragungsrichtung Downlink DL eine hohe Auslastung vorliegt, sollten die für Downlink benutzten Teilfrequenzbänder nicht mit Frequenzen überlappen, welche für ein weiteres benachbartes System reserviert sind. Falls beispielsweise in der Übertragungsrichtung Uplink UL nur eine geringe Auslastung erwartet wird, können für diese Übertragungsrichtung Uplink UL solche für ein weiteres benachbartes System reservierten Frequenzen gelegentlich benutzt werden. Diese Vorgehensweise gewährleistet einerseits geringe Interferenzen zwischen verschiedenen Systemen, ohne andererseits in der Übertragungsrichtung mit geringer Auslastung die Nutzung verfügbarer Frequenzbänder in unnötiger Weise zu beschränken.

Für das in der Fig. 5 gezeigte Duplex-Kommunikationssystem ist aufgrund der permanent erforderlichen Synchronisation der Knoten (Sensoren und/oder Aktoren) S1, S2, S3.....beispielsweise eine hohe Auslastung in der Übertragungsrichtung Downlink DL zu erwarten.

Unter Beachtung dieser asymmetrischen Auslastung bei der Duplex-Übertragung ergibt sich bei der vorstehend erläuterten *Schrittfolge* 1. - 4. zur Generierung einer Gruppe von FH-Sprungfrequenzfolgen zunächst eine Änderung dahingehend, dass die "vorgegebenen verfügbaren Frequenzbänder" nicht mit denjenigen Frequenzbändern überlappen dürfen, welche für weitere benachbarte Systeme reserviert sind. Diese Einschränkung gilt beim *Schritt 1.* jedoch nur für dasjenige Teilfrequenzband eines Teilfrequenzband-Paars, bei welchem eine hohe Auslastung zu erwarten ist, typischerweise für Downlink DL. Diese Einschränkung gilt jedoch nicht für dasjenige Teilfrequenzband eines Paars möglicher Teilfrequenzbänder, bei welchem eine geringe Auslastung zu erwarten ist, typischerweise für Uplink UL. Dieses Teilfrequenzband darf durchaus mit denjenigen Frequenzbändern überlappen, welche für weitere benachbarte Systeme reserviert sind.

Unter Beachtung der asymmetrischen Auslastung bei der Duplex-Übertragung ergibt sich bei den vorstehend unter den Ziffern 1. - 7. erläuterten, den beiden Ausführungsbeispielen respektive Erzeugungsverfahren zugrunde liegenden Annahmen / Anforderungen eine Ergänzung, nachstehend unter Ziffer 8. angeführt:

8. Wenn eine Übertragungsrichtung der Duplex-Übertragung - typischerweise Uplink - eine geringe Auslastung hat, sind für diese Übertragungsrichtung Frequenzen erlaubt, welche mit denjenigen Frequenzen überlappen, welche für weitere benachbarte Systeme reserviert sind. Grund hierfür ist, dass die durch solche Übertragungen (bei welchen das Duplex-Kommunikationssystem und das weitere benachbarte System dieselben Frequenzen benutzen) erzeugten Interferenzen vernachlässigbar sind.

Unter Beachtung der asymmetrischen Auslastung bei der Duplex-Übertragung ergibt sich bei dem vorstehend unter den *Schritten 1.- 7.* erläuterten ersten Erzeugungsverfahren eine Ergänzung hinsichtlich des 3. *Schrittes* dahingehend, dass bei einem Teilfrequenzband-Paar nur das mit hoher Auslastung betriebene Teilfrequenzband - typischerweise Downlink - das Kriterium "innerhalb der bei der Anlage A zugelassenen Frequenzen" erfüllen muss, während das mit geringer Auslastung betriebene Teilfrequenzband - typischerweise Uplink - irgend eine andere Frequenz aufweisen darf, wobei selbstverständlich bei dem so gebildeten Teilfrequenzband-Paar der vorgegebene Duplex-Frequenzabstand D = 22 MHz erfüllt sein muss.

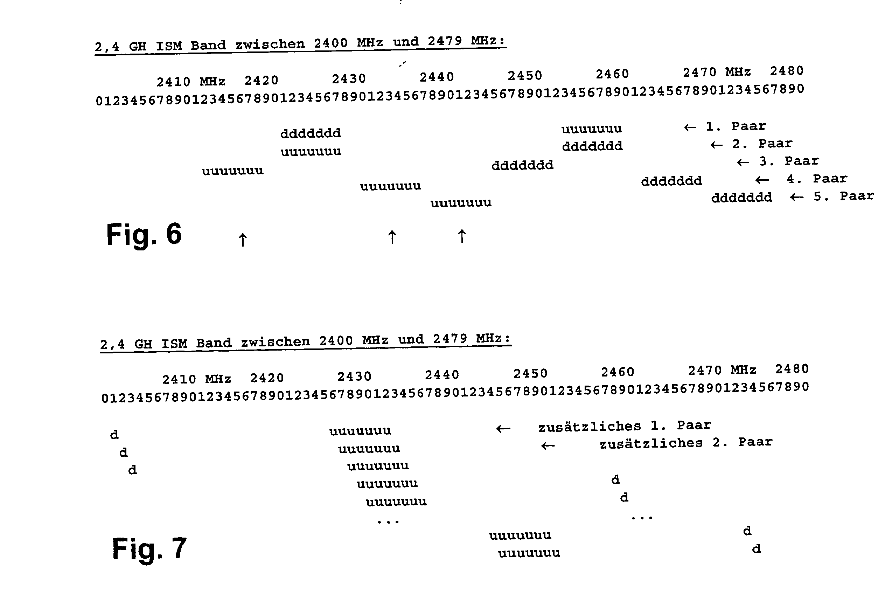

In Fig. 6 ist ein Beispiel für eine asymmetrische Auslastung bei der Duplex-Übertragung zum ersten Erzeugungsverfahren gezeigt. Da bei diesem Beispiel für Uplink auch Frequenzen zugelassen sind, welche ein benachbarter WLAN-Kanal benutzt, ergeben sich fünf unterschiedliche Teilfrequenzband-Paare an Stelle von lediglich zwei Teilfrequenzband-Paaren, welche sich ergeben, wenn die Frequenzen des benachbarten WLAN-Kanals für die Anlage A generell nicht zugelassen sind. Die sich zusätzlich ergebenden drei Teilfrequenzband-Paare sind mit Pfeilen gekennzeichnet.

Unter Beachtung der asymmetrischen Auslastung bei der Duplex-Übertragung ergibt sich bei dem vorstehend unter den *Schritten 1. - 7.* erläuterten zweiten Erzeugungsverfahren eine Ergänzung hinsichtlich des 3. *Schrittes* dahingehend, dass bei einem Teilfrequenzband-Paar nur das mit hoher Auslastung betriebene Teilfrequenzband - typischerweise Downlink - das Kriterium "innerhalb der bei der Anlage A zugelassenen Frequenzen" erfüllen muss, während das mit geringer Auslastung betriebene Teilfrequenzband - typischerweise Uplink - irgend eine andere Frequenz aufweisen darf, wobei selbstverständlich bei dem so gebildeten Teilfrequenzband-Paar der vorgegebene Duplex-Frequenzabstand D = 22 MHz erfüllt sein muss.

In Fig. 7 ist ein Beispiel für eine asymmetrische Auslastung bei der Duplex-Übertragung zum zweiten Erzeugungsverfahren dargestellt. Es sind die zusätzlich möglichen Teilfrequenzband-Paare gezeigt, welche sich ergeben, wenn die Frequenzen des benachbarten WLAN-Kanals für die Anlage A für Uplink (hier die Duplex-Übertragungsrichtung mit geringer Auslastung) zugelassen sind.

Anmerkung 1:

Zur Eigenschaft "ein-koinzident" ein einfaches Beispiel: Die Folgen [0 1 2 3 4 5 6] und [6 5 4 3 2 1 0] sind "ein-koinzident", da

| 0 | 1 | 2 | *3* | 4 | 5 | 6 |
|---|---|---|---|---|---|---|
| 6 | 5 | 4 | *3* | 2 | 1 | 0 |
|   |   |   | ↑ |   |   |   |

nur einmal - hier bei 3 - aufeinander treffen. Dies gilt auch für jede zyklische Verschiebung (Permutation) der Folgen, z. B. die zyklische Verschiebung der zweiten Folge um zwei Plätze ergibt

| 0 | 1 | 2 | 3 | *4* | 5 | 6 |
|---|---|---|---|---|---|---|
| 1 | 0 | 6 | 5 | *4* | 3 | 2 |
|   |   |   |   | ↑ |   |   |

Die Folgen treffen ebenfalls nur einmal - hier bei 4 - aufeinander und sind deshalb ein-koinzident.

Anmerkung 2:

Mittels a mod b wird allgemein der Divisionsrest bei ganzzahliger Division ermittelt, beispielsweise 0 mod 4 = 0; 1 mod 4 = 1; 2 mod 4 = 2; 3 mod 4 = 3; 4 mod 4 = 0; 5 mod 4 = 1; 6 mod 4 = 2; ....

Bezugszeichenliste:

| A | Anlage |
|---|---|
| AE | Automatisierungseinrichtung |
| BS1, BS2... | Basisstationen eines Kommunikationssystems |
| $B_H$ | Sprungfrequenz-Bandbreite = Frequenzabstand zwischen zwei Sprungfrequenzen |

| | |
|---|---|
| $B_S$ | Bandbreite eines Teilfrequenzbandes |
| cell_id | Zellen-Identifizierung |
| C1, C2... | Zellen eines Duplex-Kommunikationssystems |
| CHNL_ID | Kanäle bei einem WLAN-Kommunikationssystem |
| d | Sprungfrequenz-Index bei der Downlink-Frequenz |
| D | Duplex-Frequenzabstand |
| DL | Downlink: von der Basisstation zum einzelnen Knoten |
| FH | Frequency Hopping |
| $f_{DL}$ | Downlink-Frequenz |
| $f_{UL,u}$ | u-te Uplink-Frequenz (Sprungfrequenz-Index) |
| i | Sprungfrequenz-Index der Folge $X_i$ |
| FN | Rahmen-Nummer (bei TDMA-Kommunikation) |
| k | Teilfrequenzband-Index der Folge $W_k$ |
| n | Anzahl der möglichen Sprungfrequenzen |
| $n_B$ | Anzahl der Teilfrequenzband-Paare |
| $n_F$ | Anzahl der "Teilfrequenzband-Paare" |
| $n_I$ | Anzahl unterschiedlicher Sprungfrequenzen eines Teilfrequenzbandes = Teilfrequenzband-Bandbreite bei einem Frequenzabstand von 1 MHz zwischen zwei Sprungfrequenzen |
| p | Primzahl |
| q | Ganzzahl = Anzahl der Elemente in der Menge = Anzahl der Sprungfrequenzen = Länge einer Folge |
| S1, S2, S3.... | Knoten (Sensoren oder Aktoren) |
| u | Nummer der Uplink-Frequenz |
| UL | Uplink: von einem Knoten zur Basisstation |
| $W_k$ | $n_B$-äre Folge, Teilfrequenzband-Folgen mit Teilfrequenzband-Index k |
| $X_i$ | $n_I$-äre Folge, Sprungfrequenz-Folgen mit Sprungfrequenz-Index i |

**Patentansprüche**

1.  Verfahren zur Erzeugung von Frequency-Hopping-Frequenzfolgen bei einem drahtlosen Duplex-Kommunikationssystem in ausgewählten Frequenzbändern,

     1) wobei zunächst Teilfrequenzband-Paare gemäß folgender Paar-Identifikation identifiziert werden:

         1a) mindestens eines der beiden Teilfrequenzbänder eines Paars beinhaltet lückenlos einige Sprungfrequenzen, welche gleichzeitig aktiv sein können und welche mindestens einen vorgegebenen Frequenzabstand ($B_H$) voneinander aufweisen,
         1b) bei jedem Teilfrequenzband-Paar dient ein Teilfrequenzband als Sende-Teilfrequenzband und ein Teilfrequenzband als Empfangs-Teilfrequenzband,
         1b) innerhalb eines jeden Teilfrequenzband-Paares haben das Sende-Teilfrequenzband und das Empfangs-Teilfrequenzband mindestens einen vorgegebenen Duplex-Frequenzabstand (D),
         1d) die einzelnen Teilfrequenzband-Paare unterscheiden sich durch ihre Mittenfrequenzen voneinander,

     2) wobei eine Frequency-Hopping-Folge als Folge für eine vorgegebene Sende-Übertragungsstrecke definiert wird,
     3) wobei nach jedem Wechsel des Taktsignals eines Frequency-Hopping-Taktgebers das nächste Element dieser übertragungsstrecken-spezifischen Frequency-Hopping-Folge der Mittenfrequenz des Sende-Teilfrequenzbands zugeteilt wird,
     4) wobei als zu diesem Wechsel des Taktsignals zugehöriges Empfangs-Teilfrequenzband dasjenige Teilfrequenzband gewählt wird, welches mit dem Sende-Teilfrequenzband entsprechend der Paar-Identifikation zu einem Teilfrequenzband-Paar zusammengefasst worden ist.

2.  Verfahren nach Anspruch 1, **dadurch gekennzeichnet, dass** die Elemente der Frequency-Hopping-Folge Ganzzahlen sind.

3.  Verfahren nach Anspruch 1 oder 2, **dadurch gekennzeichnet, dass** nach erfolgter Bestimmung der Mittenfrequenzen der Teilfrequenzband-Paare Sprungfrequenzen innerhalb eines Teilfrequenzbands definiert werden, die bei einer Übertragung genutzt werden können.

4. Verfahren nach Anspruch 3, **dadurch gekennzeichnet, dass** diese Sprungfrequenzen innerhalb eines Teilfrequenzbands mittels einer separaten vorzugsweise ganzzahligen Frequency-Hopping-Folge ermittelt werden.

5. Verfahren nach Anspruch 4, **dadurch gekennzeichnet, dass** die Frequency-Hopping-Folge in zwei Stufen erhalten wird, wobei in einer ersten Stufe die Mittenfrequenzen der Teilfrequenzbänder bestimmt werden und in einer zweiten Stufe ein Sprungfrequenz-Index innerhalb des relevanten Teilfrequenzbandes bestimmt wird.

6. Verfahren nach einem der vorstehenden Ansprüche, **dadurch gekennzeichnet, dass** die von benachbarten Kommunikationssystemen verwendeten Frequenzbänder von den beim betrachteten drahtlosen Duplex-Kommunikationssystem zugelassenen Frequenzen ausgeschlossen werden.

7. Verfahren nach einem der vorstehenden Ansprüche, **dadurch gekennzeichnet, dass** die Frequency-Hopping-Folgen für unterschiedliche Übertragungsstrecken so gewählt werden, dass sie minimale Kreuzkorrelation besitzen.

8. Verfahren nach Anspruch 7, **dadurch gekennzeichnet, dass** die Anzahl der aufgefundenen Teilfrequenzband-Paare ($n_B$, $n_F$) auf die nächste kleinere Ganzzahl herabgesetzt wird, welche eine Primzahl oder eine ganzzahlige Potenz einer Primzahl ist.

9. Verfahren nach einem der Ansprüche 1 - 3 oder 6 - 8, **dadurch gekennzeichnet, dass** ein Teilfrequenzband bei einem Teilfrequenzband-Paar lediglich eine Sprungfrequenz aufweist.

10. Verfahren nach Anspruch 6, **dadurch gekennzeichnet, dass** bei asymmetrischer Auslastung der Duplex-Übertragung die von benachbarten Kommunikationssystemen verwendeten Frequenzen lediglich für die Duplex-Übertragungsrichtung mit hoher Auslastung ausgeschlossen, für die Duplex-Übertragungsrichtung mit geringer Auslastung jedoch benutzt werden.

Übertragungsfrequenz

2479 MHz ·--- Nicht
zugelassene
Frequenzen
bei der Anlage A

Zugelassene
Frequenzen
bei der
Anlage A

2401 MHz

0 q-1

**Fig. 1a**

Übertragungsfrequenz

III

II

I

0 Ganzzahl aus FH-Folge q-1

I II III

**Fig. 1b**

| Nr. | WLAN: Kanäle | WLAN: Kanäle Bandbreite MHz | Anlage A: Teilfrequenzband Bandbreite $= n_l$ MHz | Anlage A: Anzahl der Teilfrequenzband-Paare $= n_B$ | Anlage A: Anzahl der (Downlink) Frequenzen |
|---|---|---|---|---|---|
| 0. | --- | --- | 11 | 7 | 7 x 11 = 77 |
| | | | | | |
| 4. | 1 | 11 | 11 | 4 | 4 x 11 = 44 |
| | 1 | 11 | 9 | | |
| 5. | 1 | 11 | 7 | 8 | 8 x 7 = 56 |
| 7. | 1 | 17 | 11 | 4 | 4 x 11 = 44 |
| | 1 | 17 | 9 | | |
| 8. | 1 | 17 | 7 | 8 | 8 x 7 = 56 |
| 10. | 6 | 11 | 11 | 4 | 4 x 11 = 44 |
| | 6 | 11 | 9 | | |
| 11. | 6 | 11 | 7 | 5 | 5 x 7 = 35 |
| 13. | 6 | 17 | 11 | 4 | 4 x 11 = 44 |
| | 6 | 17 | 9 | | |
| 14. | 6 | 17 | 7 | 8 | 8 x 7 = 56 |
| 16. | 1, 6 | 11 | 11 | 2 | 2 x 11 = 22 |
| | 1, 6 | 11 | 9 | | |
| 17. | 1, 6 | 11 | 7 | 4 | 4 x 11 = 44 |
| 19. | 1, 6 | 17 | 11 | 0 | 0 |
| | 1, 6 | 17 | 9 | | |
| 20. | 1, 6 | 17 | 7 | 2 | 2 x 7 = 14 |

Siehe auch Fig. 4

Fig. 2

| Nr. | WLAN: Kanäle | WLAN: Band-Breite der Kanäle In MHz | Anlage A: Teilfrequenz-band Band-breite In MHz | Anlage A: Anzahl der Teilfrequenz-band-Paare | Anlage A: Anzahl der (Down-link) Fre-quenzen $=n_F$ |
|---|---|---|---|---|---|
| 22. | 1 | 17 | 7 | - | 62 |
| | | | | | |
| 26. | 1, 6 | 17 | 7 | - | 18 |

**Fig. 3**

**Fig. 5**

Stand der Technik

2,4 GH ISM Band zwischen 2400 MHz und 2479 MHz:

    2410 MHz  2420      2430   2440     2450     2460     2470 MHz  2480
01234567890123456789012345678901234567890123456789012345678901234567890123456789 0

Von WLAN mit CHNL ID = 6 benutzte Frequenzen, Bandbreite 17 MHz:

                  66666666666666666

Zugelassene Frequenzen
der Anlage A:
  XXXXXXXXXXXXXXXXXXXXXXXXXXXXX          XXXXXXXXXXXXXXXXXXXXXXXXXXXXXXXX

Acht Teilfrequenzband-Paare mit $n_I$ = 7 (MHz):

  ddddddd                             uuuuuuu     ← 1. Paar
     ddddddd                        uuuuuuu ← 2. Paar
        ddddddd                   uuuuuuu ← 3. Paar
           dddddddd             uuuuuuu ← 4. Paar
  uuuuuuu                    dddddd ← 5. Paar
     uuuuuuu                dddddd ← 6. Paar
       uuuuuuu              dddddd ← 7. Paar
         uuuuuuu           dddddd ← 8. Paar

Mittenfrequenzen des 8. Teilfrequenzband-Paares mit je sieben Sprungfrequenzen:

Sende-Teilfrequenzband ↑          Empfangs-Teilfrequenzband   ↑

Duplex-Frequenzabstand:
              DDDDDDDDDDDDDDDDDDDDDDDDDDDDDDDDDDDDDDDDDDDDDDDD

# Fig. 4

EP 2 015 465 A2

2,4 GH ISM Band zwischen 2400 MHz und 2479 MHz:

```
      2410 MHz   2420        2430       2440       2450        2460        2470 MHz    2480
01234567890123456789012345678901234567890123456789012345678901234567890123456789012345 67890

                          ddddddd                                 uuuuuuu         ← 1. Paar
                          uuuuuuu                                  dddddd          ← 2. Paar
               uuuuuuu                                                             ← 3. Paar
                                              uuuuuuu                              
                                      uuuuuuu                         dddddd       ← 4. Paar
                                            uuuuuuu                      dddddd ← 5. Paar
```

**Fig. 6**  ↑              ↑        ↑


2,4 GH ISM Band zwischen 2400 MHz und 2479 MHz:

```
      2410 MHz   2420        2430       2440       2450        2460        2470 MHz    2480
01234567890123456789012345678901234567890123456789012345678901234567890123456789012345 67890

      d                        uuuuuuu              ←     zusätzliches 1. Paar
       d                       uuuuuuu                 ←     zusätzliches 2. Paar
        d                      uuuuuuu
                               uuuuuuu                               d
                               uuuuuuu                               d
                                ...                                 ...
                                           uuuuuuu                              d
                                           uuuuuuu                                d
```

**Fig. 7**

**IN DER BESCHREIBUNG AUFGEFÜHRTE DOKUMENTE**

**In der Beschreibung aufgeführte Patentdokumente**

- DE 10334873 A1

- DE 10211235 A1

**In der Beschreibung aufgeführte Nicht-Patentliteratur**

- **J. G. PROAKIS.** Digital Communications. McGraw Hill, 1983, 580-587
- **A. A. SHAAR ; P. A. DAVIES.** A survey of one-coincidence sequences for frequency-hopped spread spectrum systems. *IEE Proceedings,* Dezember 1984, vol. 131 (7), 719-724

- **K. DOSTERT.** Powerline Kommunikation. Francis Verlag GmbH Poing, 2000, 116-123
- *IEE Proceedings,* Dezember 1984, vol. 131 (7), 719-724